Europäisches Patentamt

European Patent Office

Office européen des brevets

(19)

(11) Numéro de publication : **0 678 814 A1**

# (12) DEMANDE DE BREVET EUROPEEN

(21) Numéro de dépôt : **95400883.5**

(22) Date de dépôt : **20.04.95**

(51) Int. Cl.⁶ : **G06F 17/00**, G01T 3/06, G01N 23/22

(30) Priorité : **22.04.94 FR 9404871**

(43) Date de publication de la demande : **25.10.95 Bulletin 95/43**

(84) Etats contractants désignés : **BE DE GB**

(71) Demandeur : **COMMISSARIAT A L'ENERGIE ATOMIQUE**
**31-33, rue de la Fédération**
**F-75015 Paris (FR)**

(72) Inventeur : **Loridon, Joel**
**"La Pastourelle" Bât.B3**
**F-04100 Manosque (FR)**
Inventeur : **Ma, Jean-Luc**
**507, Avenue des Savets**
**F-04100 Manosque (FR)**
Inventeur : **Mariani, Alain**
**14, rue de la Rougière**
**F-83560 Vinon S/Verdon (FR)**
Inventeur : **Latu, Michel**
**1, Allée des Jayets**
**F-38330 Montbonnot (FR)**

(74) Mandataire : **Dubois-Chabert, Guy et al**
**c/o BREVATOME**
**25, rue de Ponthieu**
**F-75008 Paris (FR)**

(54) **Procédé et dispositif de compactage d'informations à mémoriser et de traitement de ces informations compactées.**

(57) L'invention concerne un procédé et un dispositif pour compacter des informations binaires puis les reconstruire et les traiter en temps différé. Elle consiste à compacter des informations binaires en comptabilisant, pendant un cycle déterminé, des informations reçues sur plusieurs voies puis en associant les sommes d'informations non nulles à des numéros de canaux mémoire. Elle consiste ensuite à reconstruire uniquement les informations utiles en les codant sous forme de tableaux de cycle.

Appliquée à la fission nucléaire, cette invention consiste en des traitements, en temps différé, de ces tableaux pour déterminer la proportion de neutrons induits par une fission et de neutrons provenant d'autres réactions.

FIG.1A

FIG.1B

FIG.1C

FIG.1D

FIG.1E

EP 0 678 814 A1

## Domaine technique

La présente invention a pour objet un procédé et un dispositif pour compacter des informations binaires, les mémoriser puis les reconstruire et les traiter. Elle concerne, plus particulièrement, un procédé et un dispositif pour compacter et mémoriser un train d'impulsions électriques issues de détecteurs de rayonnements puis reconstruire et traiter, en temps différé, ces impulsions afin de déterminer leur éventuelle corrélation temporelle.

L'invention trouve une application dans le domaine de la caractérisation de la matière fissile, contenue notamment dans des déchets radioactifs. Cette caractérisation permet la classification des colis de déchets radioactifs en vue de leur stockage, notamment par une évaluation de la nature et de la quantité des noyaux lourds (masse de matière fissile) contenus dans ces colis.

## Etat de la technique

Dans le domaine de la caractérisation de la matière fissile, des méthodes radioactives connues permettent un contrôle non intrusif et non destructif des colis de déchets. Cette caractérisation de la matière fissile utilise la détection des rayonnements neutroniques et/ou photoniques associés aux radio-isotopes que sont l'uranium et les transuraniens comme, par exemple : $^{235}$U, $^{238}$Pu, $^{239}$Pu, $^{240}$Pu, $^{241}$Pu. La quantification en masse requiert, généralement, la connaissance des compositions isotopiques (proportion relative) et la mesure de l'activité d'au moins un de ces différents isotopes.

Pour déterminer la composition isotopique de l'uranium et des transuraniens, il est connu d'utiliser la technique de spectrométrie $\gamma$ à haute résolution énergétique des rayonnements $\gamma$ de désactivation de ces radio-isotopes.

Les activités de ces radio-isotopes, sont quant à elles, déterminées généralement par des mesures neutroniques passives ou actives.

Les mesures neutroniques passives sont basées sur la détection des neutrons provenant de fissions spontanées et des interactions des particules $\alpha$ avec des éléments légers produisant également des neutrons. Elles permettent de signer, notamment, les contributions des isotopes pairs du Plutonium, tels que $^{238}$Pu, $^{240}$Pu ou encore $^{242}$Pu.

En mesure neutronique passive, il est intéressant de différencier les neutrons provenant des fissions spontanées de ceux provenant des interactions des particules $\alpha$ avec les éléments légers. L'analyse des coïncidences permet de signer l'origine physique des neutrons. Cette analyse des coïncidences consiste à regarder si les rayonnements détectés par le détecteur ont été émis simultanément ou, au contraire, s'ils ont été émis à des temps différents. Les neutrons émis simultanément proviennent d'une même fission spontanée. Au contraire, les neutrons émis à des temps différents, n'ont pas la même origine physique, c'est-à-dire qu'ils ne proviennent pas d'un même événement de fission.

Une analyse des coïncidences permet donc d'effectuer la discrimination entre les neutrons provenant d'une fission spontanée qui sont, dans ce cas, corrélés en temps et les neutrons dits "non appariés", ou non-corrélés, ou encore célibataires, qui sont induits par d'autres réactions que la fission spontanée et qui proviennent des interactions des particules $\alpha$ avec les éléments légers liés chimiquement aux radio-isotopes (par exemple des oxydes, des nitrures, etc.). Cette analyse des coïncidences permet, en outre, une caractérisation des radio-isotopes, à partir de la connaissance du nombre moyen de neutrons émis à chaque fission par ces radio-isotopes (: ordres de multiplicité neutronique).

Les mesures actives utilisent un système d'interrogation permettant d'induire des réactions nucléaires qui sont ensuite analysées afin de déterminer quantitativement et parfois qualitativement le contenu en matière fissile ($^{235}$U, $^{239}$Pu et $^{241}$Pu) des déchets nucléaires. Un dispositif de détection actif comprend par conséquent une source ou un générateur de neutrons, un modérateur de neutrons, généralement constitué par un matériau hydrocarboné et/ou hydrogéné, destiné à abaisser le niveau d'énergie des neutrons afin d'augmenter la probabilité de production des fissions induites et un détecteur pour détecter les neutrons et fournir les signaux correspondants à un système de mesure et de traitement de ces signaux. La plupart des détecteurs de neutrons étant essentiellement sensibles aux neutrons thermiques (par exemple les détecteurs proportionnels à $^3$He), les neutrons émis par fission spontanée ou les neutrons retardés ou les neutrons provenant des réactions ($\alpha$, n) doivent être ralentis pour augmenter la probabilité de détection.

L'analyse des coïncidences permet de discriminer les neutrons corrélés provenant d'une fission induite et les neutrons non-appariés provenant soit de la source de neutrons (générateur de neutrons), soit de réactions parasites. Les analyses de coïncidences permettent, en outre, comme dans les mesures neutroniques passives, en traitant les ordres de multiplicité, de différencier les signatures neutroniques par exemple de $^{235}$U, $^{239}$Pu, $^{241}$Pu, etc. En général, lors de mesures neutroniques actives, les contributions passives sont négligeables en regard des fissions induites. Aussi, l'analyse des coïncidences permet de réduire la part de comptage due aux neutrons non-appariés dans le bruit de fond actif. Lorsque les sources interrogatives sont de type isotopique, par exemple Am/Li, à poste fixe, le flux de neutrons interrogateurs et non appariés est constant en regard de la durée de la mesure. Aussi, dans de telles conditions, l'acquisition et le traitement des coïncidences peuvent être effectués au moyen de dispositifs identiques à ceux utilisés pour des mesures neutroniques passives.

De nombreux dispositifs électroniques sont connus pour effectuer des mesures neutroniques passives. Le dispositif JSR12 (marque déposée), commercialisé par la Société CANBERRA, est l'un de ces dispositifs électroniques réalisant des mesures neutroniques passives. A ce dispositif JSR12, un module spécifique MSR4 (marque déposée) peut être associé pour permettre de réaliser une analyse des multiplicités neutroniques. Ce module MSR4® analyse, en effet, les ordres de multiplicité des neutrons jusqu'à l'ordre 256 (correspondant à huit bits, en codage binaire).

Le dispositif JSR12® comporte des moyens de registre à décalage dans lesquels les différentes impulsions provenant du détecteur neutronique sont stockées, en fonction de leur ordre d'arrivée. Ces moyens de registre à décalage comportent une série de mémoires dont chacune des mémoires, sur ordre d'un contrôleur et d'une horloge électronique, recopie l'état de la mémoire qui la précède ; l'information obtenue en sortie de ces moyens de registre à décalage est donc "décalée". Aussi, chaque impulsion neutronique prise en compte par le dispositif JSR12® provoque, après un pré-délai, l'accumulation, dans une mémoire dite "réelle et accidentelle", des événements qui ont précédé cette impulsion neutronique sur une durée inférieure ou égale à la durée du moyen de registre à décalage. Chaque impulsion neutronique provoque, de plus, après un délai déterminé plus conséquent que le pré-délai, l'accumulation des événements non corrélés dans une mémoire dite "accidentelle".

Le module spécifique MSR4® permet, en parallèle au comptage décrit précédemment, d'effectuer l'analyse des multiplicités neutroniques, si celle-ci est requise.

Cependant, les performances d'un tel dispositif sont limitées par les éléments électroniques constituant ce dispositif qui, en raison de son mode de fonctionnement, n'est adapté qu'aux comptages à débit d'impulsions constant.

En effet, un tel dispositif ne peut pas être utilisé pour des mesures neutroniques actives en mode impulsionnel. Le principe des mesures neutroniques actives en mode impulsionnel consiste à bombarder un fût de déchets contenant éventuellement des traces de matière fissile avec une bouffée de neutrons rapides. Une fois ralentis, ces neutrons ont une certaine durée de vie et peuvent provoquer la fission des traces de matière fissile. Les flux de neutrons ont donc une décroissance temporelle non négligeable. Or, ce dispositif JSR12®, ainsi que tous les dispositifs connus comportant des "registres à décalage", effectuent l'estimation des corrélations fortuites (liées aux événements accidentels) alors que les flux de neutrons ont déjà diminué de façon très sensible.

De tels dispositifs ont donc l'inconvénient de surestimer le nombre de corrélations effectives et donc d'événements réels. Avec de tels dispositifs, il faut donc corriger les résultats obtenus des effets de décroissance des flux. Or, ces effets de décroissance proviennent de différents paramètres stables, comme la conception de la cellule de mesures, celle des blocs de détection, etc., mais aussi et surtout des propriétés neutroniques des constituants du fût de déchets à caractériser.

On comprend donc facilement qu'il est très difficile, avec le dispositif décrit ci-dessus, d'effectuer des mesures neutroniques actives en mode impulsionnel.

Exposé de l'invention

La présente invention a justement pour but de remédier aux inconvénients nommés ci-dessus. A cette fin, elle propose un procédé et un dispositif permettant, en mesure neutronique passive :
- de vérifier la pertinence des modèles physiques élaborés pour l'analyse des multiplicités neutroniques, en effectuant la reconstruction des distributions temporelles entre les impulsions ;
- de déterminer un taux de corrélations fortuites dont la précision de mesure est améliorée par rapport aux dispositifs connus.

En mesure neutronique active, l'invention permet la différenciation entre les neutrons interrogateurs non corrélés et les neutrons corrélés provenant d'une fission induite. En outre, en mode impulsionnel, elle permet essentiellement la prise en compte des évolutions temporelles rapides des différentes populations neutroniques présentes, et l'obtention directe des taux de coïncidence réelle.

De façon plus précise, l'invention consiste en un procédé de compactage d'informations binaires à mémoriser, issues de l'enregistrement des signaux détectés par un détecteur de neutrons, et de reconstruction des informations ainsi compactées en vue de leur traitement. Ce procédé consiste à :
a) effectuer l'enregistrement des signaux détectés sur une durée totale d'acquisition correspondant à K cycles de mesure. Chaque cycle comporte N canaux dont la durée d'acquisition est réglable ;
b) à chaque cycle, accumuler, sur chaque voie d'entrée, les signaux détectés durant un temps d'échantillonnage correspondant à la durée d'acquisition d'un canal ;
c) pour la durée d'acquisition d'un canal, faire la somme binaire des informations individuelles ainsi reçues sur l'ensemble des voies, et qui constitue une donnée globale ;
d) attribuer à chaque donnée globale, le numéro du canal correspondant ;

e) mémoriser chaque numéro de canal ainsi que la donnée globale qui lui est associée, lorsque ladite donnée globale est non nulle, pour constituer une donnée compactée ;

f) traiter de la même manière et jusqu'à concurrence des N canaux, les informations de ce cycle ;

g) réinitialiser l'ensemble des données pour effectuer l'enregistrement du cycle suivant ;

h) lorsque des traitements d'informations doivent être effectués, reconstruire les informations utiles contenues dans les données compactées nécessaires aux traitements ;

i) traiter ces informations utiles.

Avantageusement, l'étape g) de reconstruction des informations utiles consiste à :

- choisir les données compactées à reconstruire ; et
- pour chaque cycle, écrire ces données compactées sous la forme de tableaux comportant deux colonnes qui comprennent, respectivement, les numéro des canaux et les données globales associées à ces canaux.

Selon le procédé de l'invention, l'étape h) de traitement consiste, pour l'ensemble des cycles, à construire un tableau des distributions temporelles (RDT) pour replacer chronologiquement les informations utiles dans un même histogramme en temps, ce tableau étant construit à partir de l'instruction informatique suivante :

$$RDT_j = RDT_j + [C_i \times C_{(i + j - 1)}]$$

où j est le canal de l'histogramme en temps dans lequel les informations utiles sont chronologiquement replacées, et i, pour chaque cycle, est le numéro du canal courant.

Cette expression, ainsi que toutes les expressions du même type citées dans la description sont des instructions informatiques dans lesquelles le signe égal signifie que le terme à gauche du signe égal va prendre pour valeur le résultat du calcul des termes à droite du signal égal.

Dans le cas particulier où les informations utiles sont relatives au canal courant, on utilise l'instruction informatique :

$$RDT_{j = 1} = RDT_{j = 1} + C_i \times (C_{i - 1})/2.$$

Lorsque le procédé de l'invention est appliqué à la fission nucléaire, les informations binaires sont relatives à des événements de fission nucléaire. Dans ce cas, l'étape h) de traitement consiste à déterminer les événements réels à partir de la détection des neutrons corrélés temporellement :

- en construisant un histogramme du tableau de distributions temporelles (RDT) ;
- en déterminant, par une méthode des moindres carrés, les coefficients de l'expression :

$$RDT(t) = A_1 \exp(-B_1 xt) + A_2 \exp(-B_2 xt) + A3,$$

où $A_1 \cdot$ et $B_1$ sont des coefficients relatifs aux événements réels, $A_2$ et $B_2$ sont des coefficients relatifs à des événements accidentels variables et $A_3$ est un coefficient relatif à des événements accidentels stables au cours du temps ;

- en calculant, à partir de ces coefficients, une aire $R = A_1/B_1$ correspondant aux événements réels.

De façon avantageuse, cette étape h) de traitement consiste aussi en un calcul des coïncidences à partir d'une analyse statistique des événements réels et des événements accidentels.

Selon le procédé de l'invention, le calcul des coïncidences accidentelles consiste à déterminer, à partir du spectre total préalablement reconstruit, le nombre d'événements accidentels associés à chaque canal, et inscrits dans les G canaux suivants.

Le calcul des événements réels et accidentels consiste à déterminer, à chaque cycle et pour chaque canal, le nombre d'événements réels et accidentels inscrits dans les G canaux suivant le canal en cours de traitement.

Les coïncidences réelles sont alors obtenues pour chaque canal traité en soustrayant aux événements réels et accidentels la valeur normalisée à un cycle du nombre d'évènements accidentels associés à ce canal, et en sommant sur l'ensemble des canaux traités les valeurs ainsi obtenues.

Enfin, de manière avantageuse, la détermination du nombre moyen de neutrons émis à chaque fission (: ordre de multiplicité), est effectuée.

Ce calcul des ordres de multiplicités des événements accidentels consiste dans un premier temps à déterminer, pour chaque canal et sur l'ensemble des cycles, la distribution en nombre des événements accidentels en comptabilisant à chaque canal le nomhre d'événements mémorisés dans les G canaux suivants et en comptant, sur l'ensemble des cycles et pour ce canal, le nombre de fois où ce nombre d'événements a été calculé.

Dans un deuxième temps, suite au calcul de la distribution des événements réels et accidentels, pour le calcul en cours de traitement, les distributions des événements accidentels correspondantes sont sommées dans un registre spécifique.

Selon le procédé de l'invention, le calcul de multiplicité des événements réels et accidentels est effectué pour chaque canal, en calculant le nombre d'événements inscrits dans les G canaux suivants, et en totalisant, dans un registre spécifique, le nombre de fois où ce nombre d'événements a été trouvé.

Finalement, les multiplicités sont obtenues en soustrayant le registre des événements accidentels normalisés à un cycle du registre des événements réels et accidentels.

L'invention concerne, en outre, un dispositif de compactage d'informations binaires à mémoriser et de reconstruction d'informations compactées utiles pour des traitements différés. Ce dispositif comporte :

- un circuit d'échantillonnage comprenant une pluralité de voies d'entrée aptes à recevoir simultanément des informations binaires pendant une succession de cycles, et une pluralité de voies de sortie aptes à fournir des informations échantillonnées ;
- un circuit de mise en forme des informations comprenant une pluralité de voies d'entrée connectées aux voies de sortie du circuit d'échantillonnage et une sortie ; ce circuit de mise en forme est apte à comptabiliser, pour chaque cycle, les informations échantillonnées reçues simultanément sur les voies d'entrée et à fournir en sortie une donnée globale ;
- un circuit de codage comportant une entrée connectée à la sortie du circuit de mise en forme et une sortie ; ce circuit de codage est apte à affecter à chaque donnée globale, si celle-ci n'est pas nulle, un numéro d'un canal mémoire et à fournir en sortie une donnée compactée ;
- une mémoire comportant une entrée connectée sur la sortie du circuit de codage, et une sortie reliée à des moyens d'archivage des données compactées ;
- des moyens de traitement aptes à reconstruire les informations utiles contenues dans les données compactées et à traiter ces informations ;
- un circuit de contrôle apte à gérer les échanges d'informations et de données entre le circuit d'échantillonnage, le circuit de mise en forme, le circuit de codage, la mémoire et les moyens de traitement.

Avantageusement, ce dispositif comporte des moyens de synchronisation connectés au circuit de contrôle permettant l'acquisition des données en mode impulsionnel à partir d'un signal délivré par un générateur d'impulsions.

Lorsqu'il est mis en oeuvre dans le domaine de la fission nucléaire, ce dispositif peut comporter en outre :

- un générateur électrique de neutrons, apte à envoyer un grand nombre de neutrons sur un colis à caractériser ;
- une enceinte de mesure apte à thermaliser les neutrons à envoyer sur le colis ;
- des moyens de détection de rayonnements neutroniques aptes à détecter les rayonnements neutroniques résultant des éventuelles fissions induites dans le colis et à les transformer en informations binaires.

Brève description des dessins

- les figures 1A, 1B, 1C, 1D et 1E représentent les différentes impulsions utilisées et obtenues lors d'une mesure neutronique active en mode impulsionnel ;
- la figure 2 représente le diagramme fonctionnel du traitement de reconstruction des distributions temporelles entre les événements ;
- la figure 3 représente le diagramme fonctionnel du traitement statistique des corrélations temporelles réelles ou accidentelles ;
- la figure 4A représente de façon plus détaillée les blocs 400 et 500 du diagramme de la figure 3 ;
- la figure 4B représente de façon plus détaillée les blocs 600 et 700 du diagramme de la figure 3 ;
- la figure 4C représente de façon plus détaillée les blocs 800, 900 et 950 du diagramme de la figure 3 ;
- la figure 5 représente, schématiquement, le dispositif de l'invention ;
- la figure 6 représente, schématiquement, le dispositif de l'invention appliqué à la fission nucléaire ; et
- la figure 7 représente la courbe "RDT" de reconstruction des distributions temporelles obtenue pour un échantillon de $^{235}U$ mesuré en mode actif.

Exposé détaillé de modes de réalisation

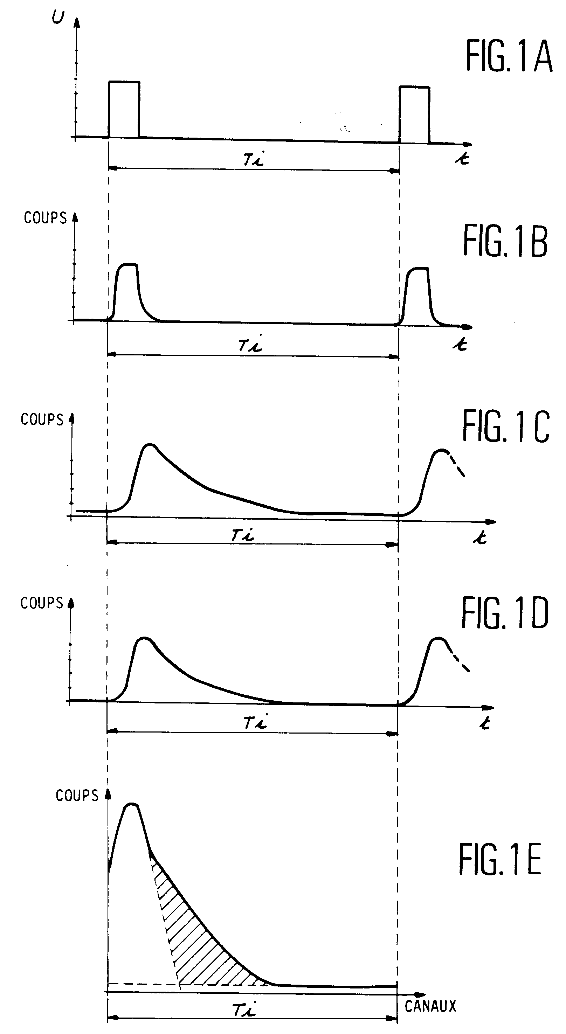

Sur les figures 1A à 1E, on a représenté les différents signaux obtenus et/ou utilisés durant le procédé selon l'invention.

Les signaux représentés sur ces figures 1A à 1E sont représentés pour des mesures neutroniques actives en mode impulsionnel. Dans un tel cas de mesure, un générateur électrique de neutrons bombarde de neutrons rapides le colis à caractériser. Les neutrons émis par le générateur électrique sont nommés neutrons interrogateurs, ou encore flux interrogateur. Après ralentissement dans un modérateur, ces neutrons provoquent des réactions de fission dans la matière fissile. Le nombre de ces réactions de fission dépend de la quantité de matière fissile contenue dans le colis.

Les différents neutrons détectés peuvent être des neutrons de fission induite ou bien des neutrons émis par fission spontanée ou encore des neutrons non-appariés, appelés aussi neutrons célibataires. On cherche donc à déterminer, d'une part, la quantité de neutrons de fission spontanée et induite et, d'autre part, la quantité des neutrons non-appariés ; ces neutrons non-appariés peuvent provenir d'une réaction gênante (du point de vue interprétation), c'est-à-dire d'une réaction parasite autre qu'un phénomène de fission ; sont aussi considérés comme des neutrons non-appariés, les neutrons interrogateurs émis par le générateur de neutrons.

Dans la suite de la description, les phénomènes dus à une fission induite ou à une fission spontanée sont appelés aussi "événements réels R", ce qui correspond aux phénomènes que l'on cherche à observer. Au contraire, les phénomènes résultant de réactions gênantes seront nommées "événements accidentels, A". L'ensemble de tous les phénomènes obtenus constituera les "événements réels et accidentels, R + A".

De façon plus précise, on cherche à déterminer si les neutrons captés par le détecteur neutronique proviennent d'un même phénomène de fission ou non. Pour savoir si les neutrons captés proviennent d'une même fission, on détermine si ces neutrons sont temporellement corrélés ou non-corrélés. En effet, les neutrons temporellement corrélés proviennent d'un même événement, donc d'une même fission ; tandis que les neutrons non-corrélés proviennent de réactions diverses et, en tout cas, pas d'un même événement de fission.

Sur la figure 1A, on a représenté le signal de synchronisation délivré par le générateur électrique et permettant de déterminer la durée d'un cycle avec : en abscisse le temps et en ordonnée la tension du signal de synchronisation. Le signal de durée $T_i$ représente la durée d'un cycle selon l'invention.

Sur la figure 1B, on a représenté un flux de neutrons rapides interrogateurs, c'est-à-dire un flux de neutrons non-corrélés puisque générés par le générateur électrique. Pour cette figure 1B, on a représenté en abscisse le temps et en ordonnée le nombre de coups, c'est-à-dire le nombre de neutrons rapides reçus pendant un temps d'échantillonnage.

Sur la figure 1C, on a représenté un flux de neutrons thermiques, c'est-à-dire de neutrons physiquement non-corrélés provenant du générateur électrique et ralentis dans la cellule de mesure. Pour cette figure, on a représenté en abscisse le temps et en ordonnée le nombre de coups.

Sur la figure 1D, on a représenté des flux de neutrons prompts provenant de fissions induites. Pour cette figure, le temps est représenté en abscisse et le nombre de coups en ordonnée.

Sur ces figures 1B à 1D, on peut donc voir l'évolution durant un cycle $T_i$ des flux de neutrons, respectivement, rapides, thermiques et prompts résultant d'une fission induite par un flux de neutrons interrogateurs.

Les figures 1C ou 1D permettent de comprendre que les flux de neutrons captés par le détecteur neutronique ont une certaine décroissance en fin de cycle $T_i$ qui s'explique par le fait que, pour être captés, les neutrons ont été volontairement ralentis (comme expliqué précédemment).

Sur la figure 1E, on a représenté la courbe obtenue pour un comptage total des neutrons captés par un détecteur neutronique. Pour cette figure, on a représenté en abscisse les canaux d'une mémoire et en ordonnée le nombre de coups. La courbe représente le spectre total de neutrons qui proviennent du générateur de neutrons, de la fission induite et des éventuelles réactions gênantes. Sur cette figure 1E, la zone hachurée représente le signal utile qui correspond d'une part aux neutrons émis lors d'une même fission induite et qui constituent les événements réels, d'autre part aux neutrons d'origines différentes (: réactions $(\alpha, n)$ avec les éléments légers ou neutrons interrogateurs du générateur,... ) et qui constituent les événements accidentels.

L'invention permet de trier dans le signal utile la part des événements réels, notés R, et celle des événements accidentels, notés A.

Le procédé selon l'invention comporte plusieurs étapes principales à savoir une étape de compactage des informations binaires à mémoriser, une étape de reconstruction et d'analyse des informations compactées et des étapes de traitements des informations décompactées.

Selon le mode de réalisation préféré de l'invention, et décrit jusqu'à présent, ces informations compactées puis décompactées sont relatives à des événements de fission nucléaire. Ces informations qui sont binaires représentent, dans les traitements de données, les impulsions électriques fournies par le détecteur neutronique. Comme expliqué déjà précédemment, lorsqu'un élément de matière fissile est bombardé par une bouffée de neutrons interrogateurs, cet élément de matière produit par fission des neutrons induits. Un détecteur neutronique capte alors ces neutrons induits ainsi que les neutrons interrogateurs envoyés par le générateur et tous les autres neutrons pouvant résulter de cette fission ou de réactions parallèles à cette fission. Ce détecteur neutronique est, de plus, apte à transcrire les neutrons reçus sous la forme d'impulsions électriques. Ce sont ces impulsions électriques, codées sous forme d'informations binaires, que l'on cherche à compacter afin de les mémoriser dans un minimum de place mémoire puis que l'on cherche à reconstruire en vue de les traiter en temps différé.

De façon plus précise, l'étape de compactage d'informations binaires, nommée ETAPE O, consiste :

- durant un temps d'échantillonnage, à recevoir sur une multitude de voies d'entrée, de façon successive ou simultanée, les signaux détectés ;
- pour chacun de ces temps d'échantillonnage, à faire une somme binaire des signaux qui ont été reçues simultanément sur plusieurs voies d'entrée, ainsi que successivement sur chacune d'entre elles ;
- à comptabiliser, pendant la durée d'un canal $T_i$, le nombre de ces informations reçues ; ce nombre constitue une donnée globale référencée $C_i$ ;
- à attribuer à chacune de ces données globales $C_i$ le numéro du canal $N_i$ correspondant.

Si la donnée globale $C_i$ est non nulle, chaque ensemble constitué du numéro de canal $N_i$ et de la donnée globale $C_i$ associée à ce numéro de canal est alors compactée et archivée. Dans le cas contraire, c'est-à-dire si la donnée globale $C_i$ est nulle (et ne comporte de ce fait aucune information utile), la donnée globale $C_i$ n'est pas mémorisée.

Comme expliqué précédemment, le procédé selon l'invention consiste ensuite à reconstruire les informations compactées afin de pouvoir les traiter. Cette étape de reconstruction des informations compactées, référencée ETAPE 1, consiste à décompacter les informations utiles, ce qui signifie que toutes les données globales nulles, qui n'ont pas été mémorisées, n'ont pas à être reconstruites. Ce procédé permet donc un gain de place mémoire important ainsi qu'un gain de temps puisqu'il permet de ne compacter et décompacter que les informations utiles. Il permet, en outre, un gain en durée de transmission fort utile en mesures actives impulsionnelles car le temps disponible entre les impulsions interrogatrices est très court.

Plus précisément, le fichier à traiter, (c'est-à-dire le fichier comportant les données compactées $C_i$ à traiter), est chargé en mémoire. Les données globales, archivées sous une forme binaire, sont alors converties sous la forme d'un tableau $CYC_k$. Chaque tableau $CYC_k$ décrit un cycle de mesures et comporte dans la première colonne les numéros des canaux $N_i$ et dans la seconde colonne les données globales $C_i$. Le nombre total k de cycles archivés est calculé. Lorsque ces tableaux $CYC_k$ ont été reconstruits, les données globales $C_i$ peuvent être traitées.

Ce traitement des données globales consiste, pour chaque tableau de cycle $CYC_k$, en une ETAPE 2 de construction d'un tableau RDT des distributions temporelles permettant de replacer les informations utiles d'un même cycle dans l'ordre chronologique de leurs arrivées sur les voies d'entrée du dispositif. A cette étape, et pour chaque cycle temporel k (avec k variant de 1 à K), un tableau $RDT_j$ est construit (avec j variant de 1 à I). On détermine ce tableau $RDT_j$ pour chaque canal courant i compris entre le canal DEB de début d'analyse et le canal FIN de fin d'analyse, à partir de l'expression :

$$E1 : RDT_j = RDT_j + [C_i \times C_{(i + j - 1)}]$$

où i représente le canal en cours de traitement, et j pouvant varier de 2 à I représente tous les canaux suivants, en tenant compte des canaux à contenu nul.

Dans le cas particulier où j=1, on calcule le tableau $RDT_1$ à partir de l'expression :

$$E2 : RDT_1 = RDT_1 + C_i \times (C_i - 1)/2.$$

Le traitement RDT consiste, en outre, en une ETAPE 3 relative au calcul des pseudo-périodes et des événements réels. Lorsque l'analyse du dernier tableau de cycle $CYC_k$ est terminée, le tableau $RDT_j$ est archivé en vue d'une éventuelle visualisation. On peut déterminer, par la technique des moindres carrés, les coefficients A1, B1, A2, B2 et A3 de l'expression :

$$E3 : RDT(t) = A1 \exp(-B1xt) + A2(\exp - B2xt) + A3$$

où les coefficients A1 et B1 sont relatifs aux populations corrélées, c'est-à-dire aux neutrons corrélés provenant d'un même événement de fission ; les coefficients A2 et B2 sont relatifs aux neutrons non-corrélés variables provenant d'événements autres que des événements de fission induite ; et le coefficient A3 est relatif aux événements stables au cours du temps.

La détermination de ces coefficients permet de connaître, sur l'histogramme, l'aire correspondant aux coïncidences réelles, c'est-à-dire aux événements réels provenant de la fission induite. Cette aire des événements réels R est égale au rapport A1/B1. Cette aire peut être exprimée soit en coups, soit en coups par seconde ; elle peut également être exprimée sous une forme normalisée à une émission générateur de référence.

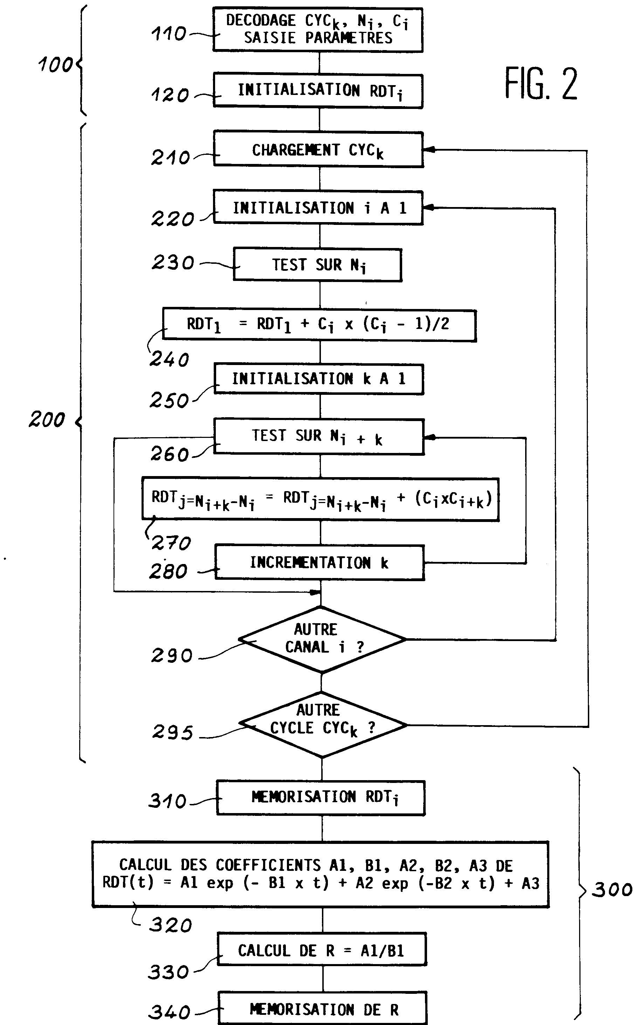

De façon plus précise, on peut se référer au diagramme fonctionnel de la figure 2 pour avoir un aperçu global de l'ensemble du traitement RDT avec :

- l'ETAPE 1 de reconstruction des informations utiles, représentée par le bloc 100 sur la figure 2 ;
- l'ETAPE 2 de construction du tableau de distributions temporelles RDT, représentée par le bloc 200 ;
- l'ETAPE 3 de calcul des pseudo-périodes et événements réels, représentée par le bloc 300.

Le bloc 100 de reconstruction des informations utiles comporte un sous-bloc 110 représentatif d'une sous-étape de décodage des tableaux $CYC_k$ et des numéros de canaux $N_i$ et de leurs contenus $C_i$. Cette sous-étape consiste, en outre, à saisir les paramètres utiles pour le traitement à effectuer : ces paramètres sont, par exemple, le temps de cycle $T_i$, le numéro du canal de début DEB, le numéro du canal de fin d'analyse FIN, le nombre de canaux à reconstruire, etc.

Le bloc 100 de reconstruction des informations utiles comporte en outre le sous-bloc 120 représentant l'étape d'initialisation du tableau de distributions temporelles $RDT_j$. Cette initialisation consiste à mettre à zéro toutes les lignes du tableau $RDT_j$, pour tous les j allant de 1 à I, lorsque I est le nombre de canaux à reconstruire.

Le bloc 200 de construction du tableau RDT comporte un sous-bloc 210 de chargement du tableau de cycle $CYC_k$ associé au cycle courant k. Le sous-bloc 220 représente la sous-étape d'initialisation du canal courant i à 1. Dans le sous-bloc 230 un test est effectué sur le numéro du canal courant $N_i$. Ce test consiste à vérifier si le numéro du canal courant $N_i$ est supérieur au numéro du canal de début d'analyse DEB et si il est inférieur au numéro du canal de fin d'analyse FIN auquel on a soustrait I-1 canaux.

Ce test consiste donc à vérifier les équations :

$$N_i > DEB \text{ et } N_i < (FIN - I + 1).$$

Le sous-bloc 240, représente la sous-étape de calcul de la ligne 1 du tableau RDT, c'est-à-dire de la valeur de RDT pour le premier canal. Cette valeur de RDT est déterminée à partir de l'expression :

$$E2 : RDT_{j = 1} = RDT_{j = 1} + C_i \times (C_i - 1)/2.$$

Dans le sous-bloc 250 suivant, la valeur k du canal suivant est initialisée à 1. Cette étape permet de restituer à partir des données compactées $N_i$ et $C_i$, les données non archivées qui correspondent à des données globales $C_i$ nulles. Le sous-bloc 260 est un test sur la valeur du numéro de canal suivant à traiter. Ce test consiste à vérifier si

$$N_{i + k} - N_{i \leq I - 1},$$

où I est le nombre total de canaux à reconstruire. Dans le cas où le test est négatif, le canal suivant en cours de traitement k est en dehors de la dynamique d'analyse et marque la fin de la reconstruction de l'histogramme pour le canal courant i. Le procédé passe alors au sous-bloc 290.

Le sous-bloc 270 représente la sous-étape de détermination de la valeur RDT pour le canal $N_{i+k} - N_i$. Cette valeur de RDT est déterminée à partir de l'expression :

$$E1 : RDT_{j = N_i + k - N_i} = RDT_{j = N_i + k - N_i} + (C_i \times C_{i + k}).$$

Dans le sous-bloc 280, on incrémente de 1 la valeur du canal suivant à traiter k. Le traitement est alors repris au bloc 260.

Le sous-bloc 290 est un test sur la présence d'au moins un autre canal courant i pour lequel des traitements doivent être effectués. Dans le cas où il existe d'autres canaux i que ceux déjà traités, le traitement est repris au bloc 220, où i est initialisé à 1.

Le sous-bloc 295, dernière sous-étape de l'ETAPE 2 de construction du tableau RDT, est un test consistant à vérifier si d'autres tableaux de cycle $CYC_k$ sont à traiter. Dans le cas où au moins un autre tableau de cycle $CYC_k$ est à traité, le procédé reprend au sous-bloc 210 de chargement de $CYC_k$. Dans le cas contraire, on peut commencer l'ETAPE 3 de calcul des pseudo-périodes et des événements réels.

Cette ETAPE 3, représentée par le bloc 300, comporte la sous-étape de mémorisation du tableau $RDT_i$ (sous-bloc 310) . Le sous-bloc 320 représente la sous-étape de calcul des coefficients A1, B1, A2, B2 et A3 de l'expression :

$$E3 : RDT(t) = A1 \exp(- B1xt) + A2 \exp(- B2xt) + A3.$$

Dans le sous-bloc 330 le calcul de l'aire R correspond aux événements réels de la fission ; elle est calculée à partir de l'expression :

$$R = A1/B1.$$

Enfin, le traitement RDT s'achève par la sous-étape de mémorisation de l'aire R calculée précédemment (sous-bloc 340).

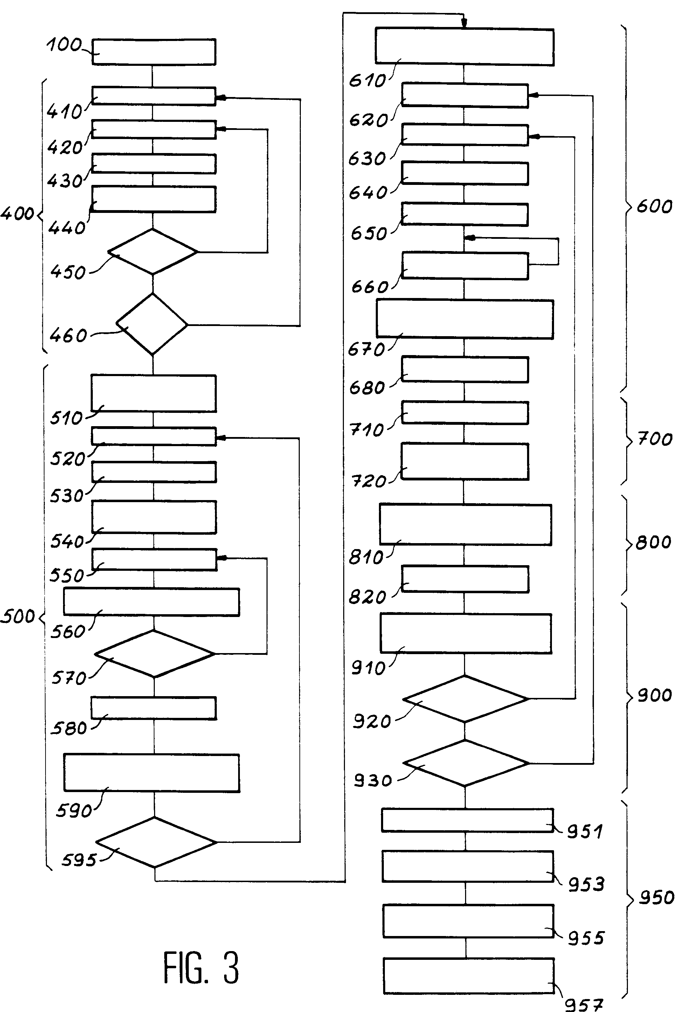

Sur la figure 3, on a représenté le diagramme fonctionnel du traitement permettant l'analyse statistique des coïncidences et de déterminer les multiplicités, appelé également traitement R+A. Ce traitement R+A consiste à déterminer les contributions réelles et accidentelles des événements. Autrement dit, il consiste à déterminer la quantité de neutrons corrélés par rapport à la quantité de neutrons non-corrélés ; on parle donc, pour les neutrons corrélés, de contribution réelle et pour les neutrons non-corrélés de contribution accidentelle.

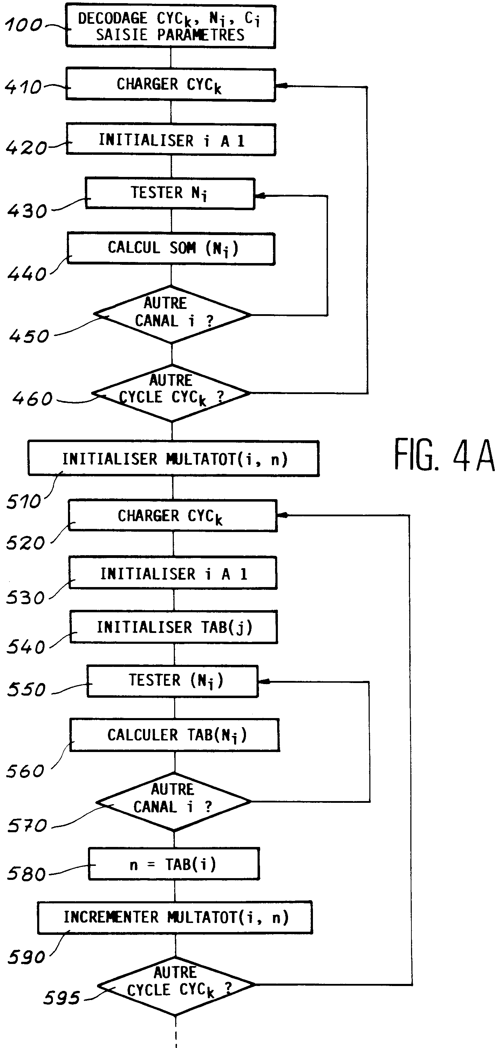

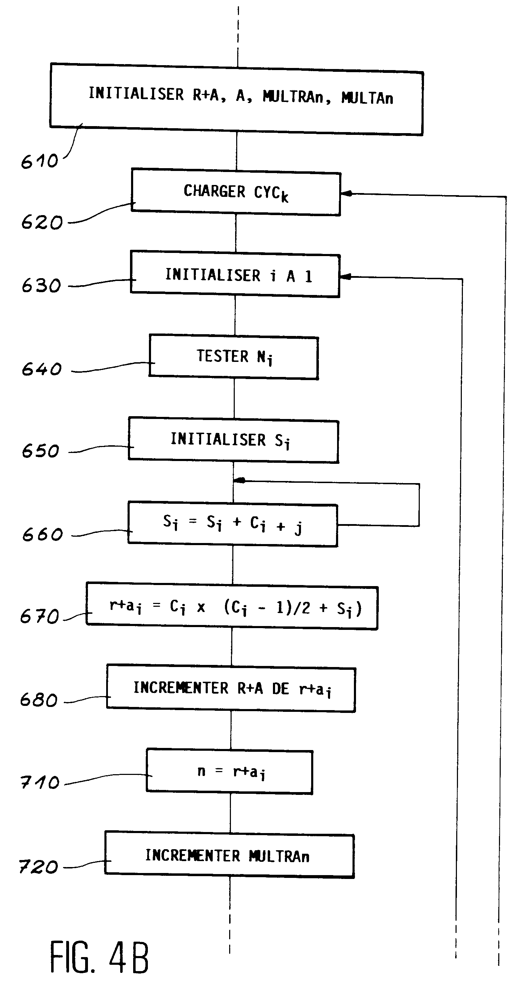

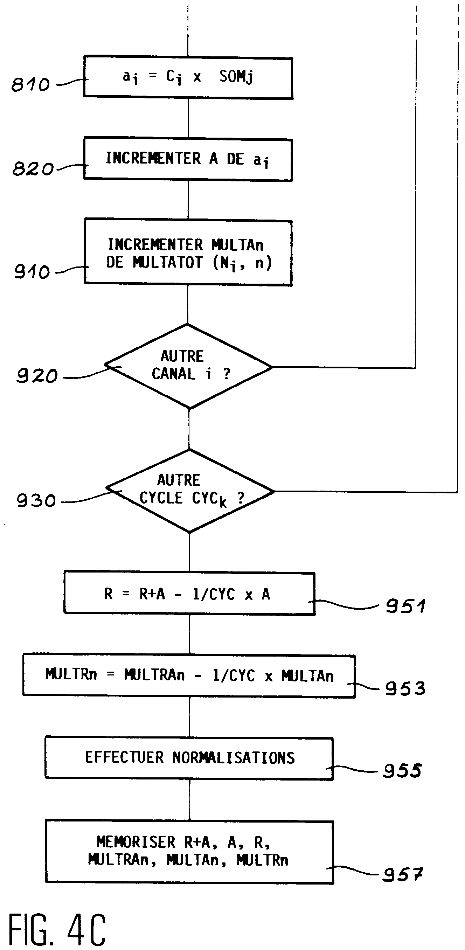

Sur cette figure 3, on a représenté l'ensemble des étapes permettant l'analyse des multiplicités. Chacune de ces étapes est décrite de façon plus détaillée dans les figures 4A, 4B et 4C.

Ce traitement R+A comporte, tout comme le traitement RDT, une ETAPE 1 de reconstruction des informations utiles. Cette étape ne sera donc pas décrite de façon plus précise puisque déjà décrite. Toutefois, elle comprend une saisie des paramètres d'analyse spécifique à ce procédé dont, en particulier, la durée G d'analyse de coïncidence.

Le traitement R+A consiste ensuite en une ETAPE 4 de calcul du spectre total. Cette ETAPE 4 consiste, pour chaque canal i, à déterminer pour l'ensemble des cycles k le spectre total $SOM_i$ qui permet, d'une part, d'effectuer le comptage total, et, d'autre part, de faciliter le calcul des événements accidentels A, c'est-à-dire le nombre de neutrons non-corrélés.

Cette ETAPE 4 est représentée par le bloc 400 sur les figures 3 et 4A. L'ETAPE 4 du calcul du spectre total comporte six sous-étapes à savoir :

- une sous-étape représentée par le sous-bloc 410 et consistant à charger le tableau de cycle courant $CYC_k$ ;
- une sous-étape qui consiste à initialiser le canal i à 1 (sous-bloc 420) ;
- une sous-étape, représentée par le sous-bloc 430, qui consiste en un test du numéro de canal $N_i$ : ce test cherche à vérifier si le numéro de canal $N_i$ est supérieur au canal de début d'analyse DEB et si ce numéro de canal $N_i$ est inférieur au canal de fin d'analyse FIN ; cette sous-étape consiste donc à vérifier les équations :

$$N_i > DEB \text{ et } N_i < FIN ;$$

- une sous-étape de calcul de l'expression $SOM_{(NI)}$ qui est le spectre total de l'ensemble des neutrons reçus par le détecteur neutronique (sous-bloc 440). Ce spectre est calculé au moyen de l'expression :

$$SOM_{(NI)} = SOM_{(NI)} + C_i ;$$

- la sous-étape suivante, représentée par le sous-bloc 450, consiste en un test pour savoir si au moins un autre canal i doit être traité. Si c'est le cas, le traitement reprend au sous-bloc 430 ; dans le cas contraire, c'est-à-dire si le canal traité était le dernier canal à traiter, on passe au bloc 460.
- Dans ce bloc 460, on regarde si un autre ta-

bleau de cycle $CYC_k$ doit être traité. Si c'est le cas, le traitement reprend au bloc 410 de chargement de $CYC_k$ ; dans le cas contraire, l'ETAPE 5 de calcul du spectre total de multiplicité est mise en oeuvre.

Cette ETAPE 5 est représentée sur les figures 3 et 4A par le bloc 500 qui comprend les sous-blocs 510 à 595. Le sous-bloc 510 est une initialisation du fichier MULTATOT$(i, n)$ comprenant l'ensemble des données relatives au spectre total de multiplicité où $i$ représente le canal et $n$ l'ordre de multiplicité. Cette initialisation à zéro est effectuée pour $i$ variant de 1 jusqu'à I et pour $n$ variant de 1 à N ;

- le sous-bloc 520 représente la sous-étape de chargement du tableau de cycle courant $CYC_k$ ;
- le sous-bloc 530 est une initialisation du canal $i$ à 1 ;
- le sous-bloc 540 est une initialisation de la variable TAB$(j)$ donnant le nombre total de coups $n$ enregistré dans les G canaux suivant le canal $i$ ; cette initialisation à zéro est faite pour $j$ variant de 1 à I ;
- le sous-bloc 550 représente un test sur $N_i$. Ce test consiste à vérifier si le numéro de canal $N_i$ est supérieur au canal de début d'analyse DEB additionné de G, où G est la durée d'analyse, et si $N_i$ est inférieur au canal de fin d'analyse ; ce test vérifie donc les équations :

$$N_i > DEB + G \text{ et } N_i < FIN \text{ ;}$$

- le sous-bloc 560 consiste à calculer la somme des coups TAB$(N_i)$ compris dans G canaux suivant le canal $i$ ;
- le sous-bloc 570 est un test pour vérifier s'il reste d'autres canaux $i$ à traiter sur le même cycle. Si c'est le cas, le traitement reprend au sous-bloc 550 de test de $N_i$ ; dans le cas contraire, le traitement se poursuit au sous-bloc 580 dans lequel est mis à jour, pour ce cycle, le fichier des données relatives au spectre total des multiplicités.

Cette mise à jour est effectuée dans le sous-bloc 590 en incrémentant pour chaque multiplicité trouvée $n=TAB(_i)$, la valeur MULTATOT $(i, n)$ d'une unité.

- le sous-bloc 595 est un test pour vérifier si tous les tableaux de cycle $CYC_k$ ont été traités ; si ce n'est pas le cas, le traitement reprend au sous-bloc 520 de chargement du tableau de cycle ; si c'est le cas, le traitement se poursuit par l'ETAPE 6 de calcul R+A.

L'ETAPE 6 de calcul R+A consiste à évaluer le nombre d'événements réels et accidentels. Cette ETAPE 6 est représentée par le bloc 600 sur les figures 3 et 4B. Elle comporte :

- une première sous-étape (sous-bloc 610) consistant à initialiser les paramètres R+A, A, MULTRA$_n$, MULTA$_n$, où R+A est le nombre d'événements accidentels et réels. A est le nombre d'événements accidentels, MULTRA$_n$ et MULTA$_n$ sont les fichiers de multiplicité respectifs de R+A et A. ;

- le sous-bloc 620 représente la sous-étape de chargement du tableau de cycle courant $CYC_k$ ;
- dans le sous-bloc 630, le canal courant $i$ est initialisé à 1 ;
- le sous-bloc 640 est un test sur $N_i$ ; ce test consiste à vérifier si le numéro $N_i$ du canal $i$ est supérieur ou égal au numéro de canal de début d'analyse et strictement inférieur au numéro de canal de fin d'analyse auquel on retranche G-1 ;
- la sous-étape, représentée par le bloc 650, consiste à initialiser le compteur $S_i$ à zéro ;
- le sous-bloc 660 représente le calcul du nombre d'impulsions inscrit dans la durée d'analyse G suivant le canal courant $i$ ; on calcule en effet, dans cette sous-étape, $S_i$ pour $j$ variant de 1 à G-1, dans le cas où $N_{i+j}-N_i$ est strictement inférieur à G ; ce calcul s'effectue à partir de l'expression :

$$S_i = S_i + C_{i+j}.$$

- les sous-blocs 670 et 680 représentent la sous-étape consistant à déterminer, pour le numéro de canal $N_i$, le nombre total des événements réels et accidentels à partir des expressions suivantes :

$$E4 : r + a_i = C_i \times [(C_i - 1)/2 + S_i]$$
$$\text{et } E5 : R + A = R + A + r + a_i.$$

Le procédé de traitement R+A comporte en outre une ETAPE 7 de décodage de l'ordre multipolaire des événements réels et accidentels R+A. Ce décodage est obtenu, pour le canal $N_i$, en incrémentant le registre de multiplicité correspondant. Cette ETAPE 7 représentée par le bloc 700 sur les figures 3 et 4B, comporte le sous-bloc 710 où l'ordre de multiplicité $n$ est rendu égal à r+ai. Cette ETAPE 7 comporte de plus la sous-étape relative au sous-bloc 720 et qui consiste à incrémenter le fichier total de multiplicités MULTRA$(n)$ de 1.

Le traitement R+A comporte une huitième étape, ETAPE 8, de calcul des événements accidentels. Cette ETAPE 8 est représentée sur les figures 3 et 4C par le bloc 800. Pour le canal $N_i$, et pour l'ensemble des cycles disponibles, on calcule la somme des événements qui s'inscrivent à partir du numéro de canal $N_i$ et pour la durée d'analyse de G canaux. Cette somme est calculée à partir de l'expression :

$$E6 \ : \ a_i = C_i \times \sum_{N_i}^{N_i+G-1} SOM_j \, .$$

Ce calcul de $a_i$ représente donc les événements accidentels pour le canal de numéro $N_i$.

Le sous-bloc 820 représente l'étape qui consiste à incrémenter le nombre total d'événements accidentels A du nombre $a_i$ déterminé précédemment.

Le traitement R+A peut comporter, en outre, une ETAPE 9 de décodage des ordres de multiplicité des événements accidentels. Ainsi, pour le canal de numéro $N_i$, en cours de traitement, les multiplicités accidentelles sont calculées à partir du fichier MULTATOT ($N_i$,n). Cette ETAPE 9 comporte donc un sous-bloc 910 consistant à incrémenter $MULTA_n$ du fichier MULTATOT($N_i$,n). Le sous-bloc 920 est un test pour vérifier si tous les canaux i ont été traités ; si ce n'est pas le cas, le traitement reprend au sous-bloc 630 d'initialisation du canal i ; si c'est le cas, le traitement se poursuit au sous-bloc 930.

Le sous-bloc 930 est un test pour vérifier si tous les tableaux de cycle $CYC_k$ ont été traités ; si ce n'est pas le cas, le traitement reprend au sous-bloc 620 de chargement du tableau de cycle $CYC_k$ ; si c'est le cas, le traitement se poursuit par l'ETAPE 10.

Le traitement R+A peut se poursuivre par l'ETAPE 10 d'édition et/ou d'archivage des résultats d'analyse. En effet, après traitement de tous les tableaux de cycle $CYC_k$, le calcul des événements réels est obtenu par soustraction du nombre d'événements accidentels normalisé au nombre total de cycles. Cette ETAPE 10, représentée par le bloc 950 sur les figures 3 et 4C, comporte une sous-étape (sous-bloc 951) consistant à déterminer justement ce nombre d'événements réels R à partir de l'expression :

E7 : R = R + A - 1/CYC x A.

Pour chaque ordre de multiplicité n, la part des événements réels (sous-étape 953) est ensuite calculée au moyen de l'expression :

E8 : $MULTR_n$ = $MULTRA_n$ - 1/CYC x $MULTA_n$.

Le sous-bloc 955 représente une étape de normalisation par rapport à l'émission par le générateur de référence. Le sous-bloc 957 représente l'archivage et l'édition des résultats obtenus, soit en coups, soit en coups par seconde.

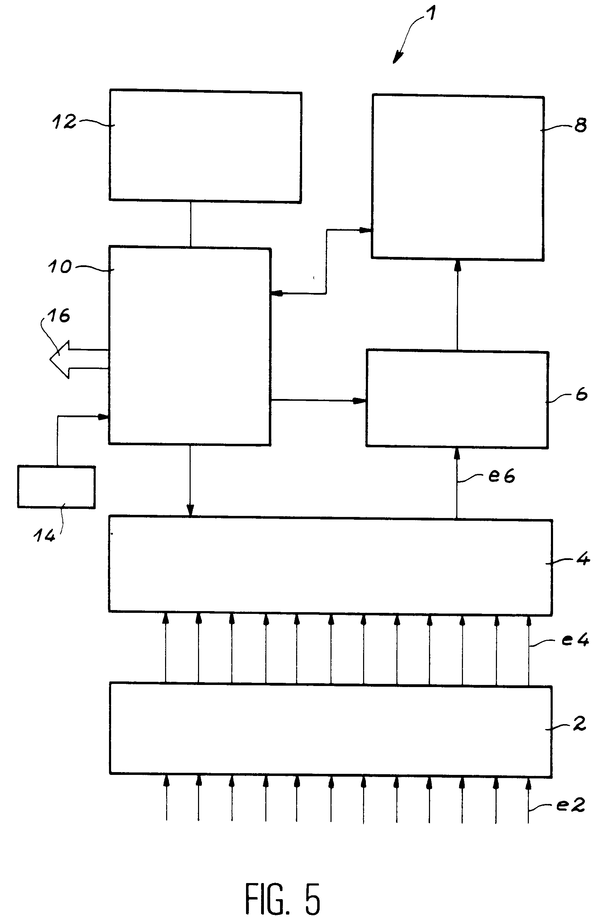

Sur la figure 5, on a représenté le dispositif 1 permettant de mettre en oeuvre le procédé décrit précédemment.

Ce dispositif comporte un circuit d'entrée, appelé également circuit d'échantillonnage et référencé 2. Ce circuit d'échantillonnage 2 comprend une pluralité de voies d'entrée e2 (12 voies selon le mode de réalisation préféré) permettant audit circuit de recevoir simultanément plusieurs informations binaires (ou impulsions électriques). Ce circuit d'échantillonnage 2 échantillonne, avec une fréquence F (par exemple de l'ordre de 10 MHz), l'état des entrées e2. Cet échantillonnage est effectué pour une durée de canal donné (1 à 999 µs).

Le résultat de cet échantillonnage est transmis au circuit de mise en forme 4 par les voies d'accès e4. Le circuit d'échantillonnage 2 a donc pour avantage de transmettre, au circuit de mise en forme 4, des informations avec une résolution temporelle entre deux impulsions arrivant successivement sur la même voie, de 1/F (pour l'exemple ci-dessus, 1/F équivaut à 100ns).

Ce circuit de mise en forme 4 comprend des moyens électroniques pour comptabiliser, pour chaque canal, les informations échantillonnées qui ont été reçues simultanément sur les voies d'entrée e2. Le rôle de ce circuit de mise en forme 4 est sensiblement similaire à celui d'une échelle de comptage. Ce circuit 4 intègre, sur ordre du contrôleur 10 (qui sera décrit ultérieurement) et pour une durée d'inspection $T_i$ (qui correspond à la durée d'un canal), les échantillonnages qui lui sont transmis des différentes voies d'entrée e4. Ainsi, par exemple, deux impulsions présentes simultanément sur des voies différentes sont comptabilisées (somme binaire). A la fin du temps d'inspection $T_i$ (durée d'un canal), le circuit de mise en forme 4 transmet à un codeur 6 la somme des coups $C_i$ ainsi calculée. On rappelle qu'un coup est le nombre d'impulsions calculées pour chaque échantillonnage.

Ce circuit de mise en forme 4 a pour avantage, lorsqu'il est associé au circuit d'échantillonnage 2, de permettre une réduction considérable des temps morts qui existent lors des analyses de coïncidence. Ce circuit 4 permet l'obtention d'un taux de comptage d'environ $10^6$cps, sans perte de comptage.

La somme des coups $C_i$ calculée par le circuit de mise en forme 4 constitue une donnée globale. Chaque donnée globale est transmise, par la connexion e6, à un circuit de codage 6. Ce circuit de codage 6 a pour rôle de générer le numéro du canal courant $N_i$.

Pour le mode de réalisation préféré du dispositif de l'invention, le nombre de canaux étant 1024, le circuit 6 génère donc un numéro de canal courant allant de N=1 à N=1024.

Pour le canal courant $N_i$, le circuit de codage 6 teste la valeur $C_i$ transmise. Si cette valeur est strictement supérieure à 0, le circuit 6 transmet, à la mémoire tampon 8 un mot codé (par exemple de 16 bits) représentant le numéro du canal $N_i$ et son contenu $C_i$. Ce mot codé est appelé "donnée compactée". Dans le cas où la donnée globale $C_i$ est nulle, le circuit de codage 6 incrémente le canal courant. Lors du traitement du dernier canal (le 1024[ième] pour l'exemple proposé), après son éventuel codage, le circuit 6 édite un caractère spécifique marquant la fin de la durée du cycle.

Un tel circuit de codage 6 permet de réduire au strict nécessaire la taille de l'information à mémoriser ; en effet, seules les informations utiles (dont le contenu n'est pas nul) sont codées.

Le dispositif de l'invention comporte en outre une mémoire tampon 8 dimensionnée en regard des taux de comptage que l'on désire obtenir. Cette mémoire 8 est gérée par le contrôleur 10 et permet la transmission séquentielle des informations mémorisées vers ce contrôleur 10. C'est sur ordre du contrôleur 10 que :

- soit les données provenant du circuit de codage 6 sont mémorisées dans la mémoire tampon 8 ;
- soit les données mémorisées dans la mémoire 8 sont transmises à un micro-ordinateur (par exemple du type PC), via le bus d'interface 16 selon le principe de transmission FIFO (First in First out).

Le contrôleur 10, cité plusieurs fois précédemment, a pour fonction de dialoguer avec le micro-ordinateur (non représenté sur les figures) ; il a également pour fonction la gestion des paramètres de mesure utilisés dans le procédé décrit précédemment ainsi que la gestion des différents circuits constituant le dispositif 1 de l'invention.

Durant les phases de paramétrage, le contrôleur 10 lit les différents réglages tels que la durée du retard de synchronisation, la durée par canal $T_i$, la vitesse d'échange, le nombre total de cycles de mesure CYC, etc., et les transmet aux différents circuits correspondants en les initialisant.

Lors des phases de mesure, le contrôleur 10 attend l'apparition du signal de synchronisation et décrémente le nombre de cycles de mesure CYC, et valide le fonctionnement du circuit de mise en forme, du circuit de codage et de la mémoire tampon.

Il est bien entendu que le rôle du contrôleur vient d'être décrit dans le cas où la synchronisation provient d'un circuit de synchronisation 14 extérieur au contrôleur 10. Cependant, dans certains cas, la synchronisation peut être fournie de façon interne, c'est-à-dire sans circuit de synchronisation 14, mais au contraire par le contrôleur 10 lui-même.

Durant les cycles de mesure, le contrôleur 10 génère la transmission des données entre la mémoire tampon 8 et l'ordinateur via le bus d'interface 16. A l'aboutissement du cycle courant, et tant qu'il reste des cycles à analyser, le contrôleur 10 réinitialise tous les circuits du dispositif 1. Au contraire, lorsque le cycle courant est terminé et qu'il était le dernier, le contrôleur 10 rend la main à l'ordinateur et se met en mode de veille.

Le dispositif selon l'invention comporte en outre un circuit de synchronisation 14 qui est court-circuité, lorsqu'une synchronisation en mode interne est choisie. Ce circuit de synchronisation 14 transmet au contrôleur 10, le signal permettant la validation de l'acquisition des cycles de mesure et leur comptage.

Ce dispositif de l'invention comporte en outre une source d'alimentation secteur/basse tension. Cette source d'alimentation, référencée 12, convertit la tension du secteur en une tension continue pour alimenter les autres circuits du dispositif.

Comme il a été souvent fait référence dans la description qui précède, le dispositif comporte un ordinateur, qui n'a pas été représenté sur la figure 5 par mesure de simplification de cette figure. Cet ordinateur peut être du type PC et permet l'archivage des fichiers utilisés lors des mesures. Lors de la phase de paramétrage, cet ordinateur permet à l'utilisateur de saisir les paramètres de mesure qui seront ensuite transmis au contrôleur 10. En phase de mesure, cet ordinateur dialogue avec le contrôleur 10 pour échanger les données et les archiver dans des moyens de stockage tels qu'un disque dur.

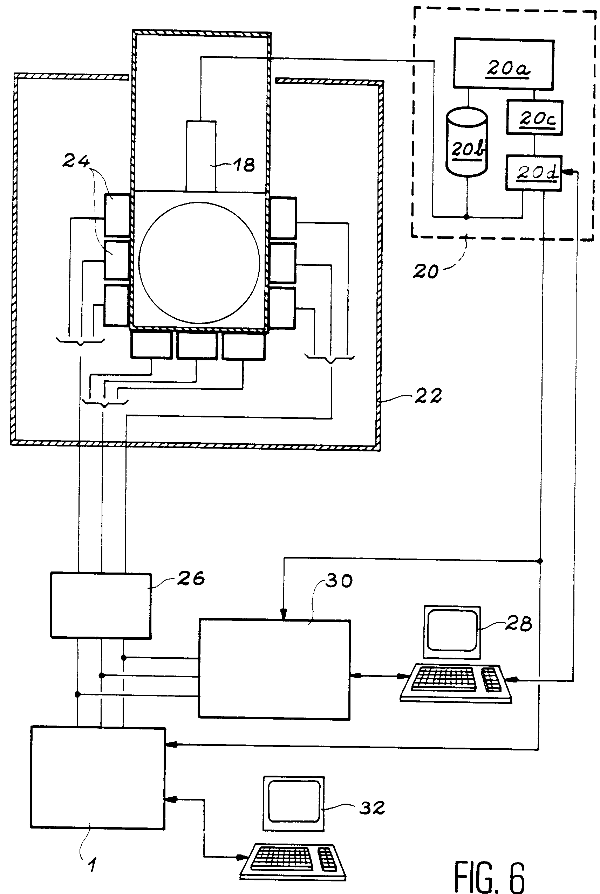

Sur la figure 6, on a représenté un dispositif de caractérisation de matières fissiles contenues dans un fût de déchets. Ce dispositif de caractérisation utilise le dispositif de l'invention décrit dans la figure 5. Ce dispositif de caractérisation de matières fissiles comporte en plus :

* un générateur électrique de neutrons 18 émettant des bouffées de neutrons pour bombarder l'intérieur du fût à inspecter ;
* des moyens 20 d'alimentation électrique et de commande du générateur 18 comportant une alimentation de puissance 20a, une alimentation basse tension 20c, un circuit de commande 20d et un dispositif de synchronisation 20b ;
* une enceinte 22 de mesure qui comprend des moyens modérateurs (tels que du polyéthylène) et des moyens réflecteurs (tels que du graphite) pour thermaliser les neutrons interrogateurs bombardés par le générateur électrique 18 ;
* une pluralité de détecteurs neutroniques 24 aptes à détecter le rayonnement neutronique induit par la fission nucléaire ;
* un circuit électronique 26 d'alimentation électrique des compteurs, et de mise en forme (norme TTL) des impulsions provenant des détecteurs 24 ;
* un ordinateur 28 de contrôle/commande dédié au comptage total ;
* des échelles de comptage 30 recevant en entrée, d'une part, le signal de synchronisation provenant du dispositif de synchronisation 20d et, d'autre part, les différents signaux TTL provenant du circuit 26 d'alimentation et de mise en forme ;
* le dispositif de l'invention, référencé 1 ;
* et un ordinateur 32 d'archivage et de traitement, dédié aux mesures de coïncidence, le rôle de cet ordinateur 32 ayant été décrit lors de la description de la figure 5.

Le dispositif représenté schématiquement sur cette figure 6 exploite le principe de l'interrogation neutronique active. Selon ce principe, une bouffée de neutrons rapides est émise à l'instant t par le générateur de neutrons 18. Par suite des processus d'interaction neutrons/matière, ces neutrons vont être thermalisés. La matière fissile éventuellement contenue dans le fût est alors soumise à une exposition de neutrons thermiques qui provoquent sa fission. La détection des neutrons rapides issus de cette fission induite est exploitée pour quantifier la masse de matière fissile contenue dans le fût.

Le dispositif selon l'invention, représenté sur la figure 5, permet de discriminer les événements dus aux neutrons interrogateurs des événements dus aux neutrons de fission induite ; il permet ainsi, de réduire les bruits parasites, et donc, d'améliorer les limites de détection du dispositif proposé sur cette figure 6. De plus, le dispositif de l'invention offre la possibilité d'effectuer des analyses de multiplicité ce qui permet de caractériser la nature (U ou Pu) des isotopes fissiles ainsi que d'apprécier une éventuelle contamination par d'autres isotopes tels que des isotopes de curium.

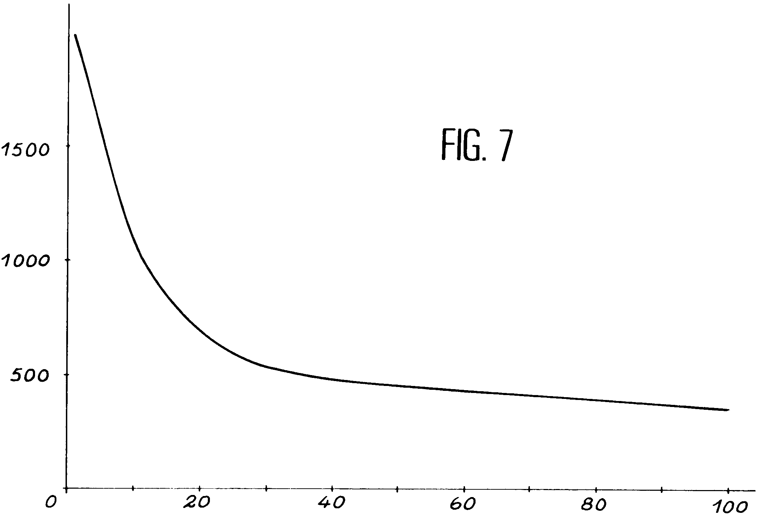

Sur la figure 7, on a représenté un exemple de construction RDT obtenue en mesure active impulsionnelle, pour un échantillon d'environ 10g d'uranium 235. Les conditions dans lesquelles cette courbe a été obtenue sont les suivantes : le générateur de neutrons a émis, à une fréquence fixe de 125 Hertz, des bouffées de neutrons rapides à intervalle de 15 $\mu$s ; il a délivré des signaux de synchronisation de type TTL qui ont été utilisés pour la synchronisation des échelles de comptage et du dispositif 1 de l'invention.

L'enregistrement obtenu correspond au réglage suivant : un nombre total de cycles de 112500, une durée de canal de 3$\mu$s par canal et un retard de synchronisation de 40$\mu$s. La courbe obtenue se présente comme la somme de deux exponentielles, à savoir une première courbe exponentielle dont la pseudo-période serait $T_{1/2}$, d'environ 17$\mu$s et une seconde courbe exponentielle qui décroît beaucoup plus lentement en accord avec la durée de vie des neutrons interrogateurs dans la cellule de mesure.

**Revendications**

1. Procédé pour compacter des informations binaires issues d'un enregistrement de signaux provenant d'un détecteur de neutrons devant être mémorisées et pour reconstruire des informations utiles ainsi compactées afin de les traiter, caractérisé en ce qu'il consiste à :

   a) effectuer l'enregistrement de signaux détectés durant une durée totale d'acquisition correspondant à un nombre (K) de cycles de mesures, chaque cycle comportant un nombre (N) de canaux ayant une durée d'acquisition réglable ;

   b) à chaque cycle, accumuler les signaux détectés durant un temps d'échantillonnage correspondant à la durée d'acquisition d'un canal, chacun de ces signaux réalisant une information individuelle ;

   c) pour la durée d'acquisition d'un canal, effectuer une somme binaire de ces informations individuelles, ces informations ainsi sommées constituant une donnée globale ;

   d) attribuer à chaque donnée globale le numéro du canal (Ni) correspondant ;

   e) mémoriser chaque numéro de canal ainsi que la donnée globale qui lui est associée, lorsque ladite donnée globale est non nulle pour constituer une donnée compactée ;

   f) réinitialiser chacune des données pour effectuer l'enregistrement du cycle suivant ;

   g) pour effectuer des traitements d'informations, reconstruire (ETAPE 0) les informations utiles contenues dans les données compactées correspondantes ;

   h) traiter ces informations utiles (ETAPE 1 à ETAPE 10).

2. Procédé selon la revendication 1, caractérisé en ce que l'étape f) de reconstruction des informations utiles consiste à :

   - choisir les données compactées à reconstruire ; et

   - pour chaque cycle, écrire ces données compactées sous la forme de tableaux (CYC) comportant deux colonnes comprenant, respectivement, les numéro des canaux ($N_i$) et les données globales ($C_i$) associées à ces canaux, chaque tableau étant représentatif d'un cycle.

3. Procédé selon la revendication 2, caractérisé en ce que l'étape h) de traitement consiste, pour tous les cycles, à construire un tableau des distributions temporelles (RDT) pour replacer chronologiquement à chaque cycle les informations utiles dans un même histogramme en temps, ce tableau étant construit à partir de l'instruction informatique :

$$RDT_j = RDT_j + [C_i \times C_{(i+j-1)}]$$

où i est le canal en cours de traitement et j représente tous les canaux suivant i en tenant compte des canaux dont le contenu est nul.

4. Procédé selon la revendication 3, caractérisé en ce que les informations utiles relatives au premier cycle sont déterminées par l'expression :

$$RDT_1 = RDT_1 + C_i \times (C_{i-1})/2.$$

5. Procédé selon l'une quelconque des revendications 1 à 4, dans lequel les informations binaires sont relatives à des événements de fission nucléaire réels ou accidentels provenant d'une projection de neutrons sur une matière fissile, caractérisé en ce que l'étape h) de traitement consiste à déterminer les événements réels à partir d'une détection de neutrons temporellement corrélés :

   - en construisant un histogramme du tableau de distributions temporelles (RDT) ;
- en déterminant, par une méthode des moindres carrés, les coefficients de l'expression :

$$RDT(t) = A_1 \exp(-B_1 xt) + A_2 \exp(-B_2 xt) + A_3,$$

où $A_1$ et $B_1$ sont des coefficients relatifs aux événements réels, $A_2$ et $B_2$ sont des coefficients relatifs à des événements accidentels variables et $A_3$ est un coefficient relatif à des événements accidentels stables au cours du temps ;
- en calculant, à partir de ces coefficients, une aire $R = A_1/B_1$ correspondant aux événements réels.

6. Procédé selon l'une quelconque des revendications 1 à 5, dans lequel les informations binaires sont relatives à des événements de fission nucléaire pouvant être réels ou accidentels, caractérisé en ce que l'étape h) de traitement consiste en un calcul des coïncidences à partir d'une analyse statistique des événements réels et des événements accidentels.

7. Procédé selon la revendication 6, caractérisé en ce que le calcul des coïncidences accidentelles consiste à déterminer, à partir du spectre total, le nombre total d'événements accidentels associés à chaque canal.

8. Procédé selon l'une quelconque des revendications 6 et 7, caractérisé en ce que le calcul des événements réels et accidentels consiste à déterminer, pour tous les cycles, le nombre total d'événements réels et accidentels pour chaque canal.

9. Procédé selon les revendications 7 et 8, caractérisé en ce que les coïncidences réelles sont obtenues en soustrayant le nombre total d'événements accidentels du nombre total d'événements réels et accidentels.

10. Procédé selon l'une quelconque des revendications 6 à 9, caractérisé en ce qu'il consiste en la détermination d'un nombre moyen de neutrons émis à chaque fission, ce nombre étant déterminé pour tous les cycles de mesure et pour chaque canal.

11. Procédé selon l'une quelconque des revendications 6 à 10, caractérisé en ce qu'il consiste en un calcul des ordres de multiplicité des événements accidentels par détermination pour chaque canal et pour tous les cycles, d'un spectre de multiplicité des événements accidentels en comptabilisant le nombre d'événements mémorisés dans les canaux (G) suivant le canal en cours de traitement et en totalisant pour tous les cycles, le nombre de fois où ce nombre d'événements a été calculé.

12. Procédé selon l'une quelconque des revendications 6 à 11, caractérisé en ce qu'il consiste en un calcul des ordres de multiplicité des événements réels par détermination, pour chaque canal, du nombre d'événements mémorisés dans les canaux (G) suivant le canal en cours de traitement et par totalisation, pour tous les cycles, du nombre de fois où ce nombre d'événements a été trouvé.

13. Dispositif de compactage d'informations binaires à mémoriser et de reconstruction d'informations compactées utiles en vue de traitements, caractérisé en ce qu'il comporte :
- un circuit d'échantillonnage (2) comprenant une pluralité de voies d'entrée (e2) aptes à recevoir simultanément des informations binaires pendant une succession de cycles, et une pluralité de voies de sorties aptes à fournir des informations échantillonnées ;
- un circuit de mise en forme (4) des informations comprenant une pluralité de voies d'entrée (e4) connectées aux voies de sortie du circuit d'échantillonnage et une sortie, ce circuit de mise en forme étant apte à comptabiliser pour chaque cycle les informations échantillonnées reçues simultanément sur les voies d'entrée et à fournir en sortie une donnée globale ;
- un circuit de codage (6) comportant une entrée (e6) connectée à la sortie du circuit de mise en forme et une sortie, ce circuit de codage étant apte à affecter à chaque donnée globale ($C_i$), si celle-ci n'est pas nulle, un numéro d'un canal mémoire ($N_i$) et à fournir en sortie une donnée compactée ;
- une mémoire (8) comportant une entrée connectée sur la sortie du circuit de codage et une sortie reliée à des moyens d'archivage des données compactées ;
- des moyens de traitement (32) aptes à reconstruire les informations utiles contenues dans les données compactées et à traiter ces informations ;
- un circuit de contrôle (10) apte à gérer les échanges d'informations et de données entre le circuit d'échantillonnage, le circuit de mise en forme, le circuit de codage, la mémoire et les moyens de traitement.

14. Dispositif selon la revendication 13, caractérisé en ce qu'il comporte des moyens de synchronisation (14) connectés au circuit de contrôle permettant l'acquisition des données en mode impulsionnel à partir d'un signal délivré par un générateur d'impulsions.

15. Dispositif selon l'une quelconque des revendications 13 et 14 dans lequel les informations binaires sont relatives à des événements de fission, caractérisé en ce qu'il comporte en outre :
   - un générateur électrique (18) de neutrons, apte à envoyer un grand nombre de neutrons sur un colis à caractériser ;
   - une enceinte de mesure (22) apte à thermaliser les neutrons à envoyer sur le colis ;
   - des moyens de détection (24, 26) de rayonnements neutroniques aptes à détecter les rayonnements neutroniques résultant des éventuelles fissions induites dans le colis et à les transformer en informations binaires.

FIG.1A

FIG.1B

FIG.1C

FIG.1D

FIG.1E

15

FIG. 2

110 — DECODAGE CYC$_k$, N$_i$, C$_i$ SAISIE PARAMETRES

100

120 — INITIALISATION RDT$_i$

210 — CHARGEMENT CYC$_k$

220 — INITIALISATION i A 1

230 — TEST SUR N$_i$

240 — RDT$_1$ = RDT$_1$ + C$_i$ x (C$_i$ − 1)/2

250 — INITIALISATION k A 1

260 — TEST SUR N$_i$ + k

200

270 — RDT$_{j=N_i+k-N_i}$ = RDT$_{j=N_i+k-N_i}$ + (C$_i$xC$_{i+k}$)

280 — INCREMENTATION k

290 — AUTRE CANAL i ?

295 — AUTRE CYCLE CYC$_k$ ?

310 — MEMORISATION RDT$_i$

320 — CALCUL DES COEFFICIENTS A1, B1, A2, B2, A3 DE RDT(t) = A1 exp (− B1 x t) + A2 exp (−B2 x t) + A3

300

330 — CALCUL DE R = A1/B1

340 — MEMORISATION DE R

16

FIG. 3

DECODAGE CYC$_k$, N$_i$, C$_i$
SAISIE PARAMETRES

100

CHARGER CYC$_k$

410

INITIALISER i A 1

420

TESTER N$_i$

430

CALCUL SOM (N$_i$)

440

AUTRE
CANAL i ?

450

AUTRE
CYCLE CYC$_k$ ?

460

INITIALISER MULTATOT(i, n)

510

FIG. 4 A

CHARGER CYC$_k$

520

INITIALISER i A 1

530

INITIALISER TAB(j)

540

TESTER (N$_i$)

550

CALCULER TAB(N$_i$)

560

AUTRE
CANAL i ?

570

n = TAB(i)

580

INCREMENTER MULTATOT(i, n)

590

AUTRE
CYCLE CYC$_k$ ?

595

INITIALISER R+A, A, MULTRAn, MULTAn

610

CHARGER CYC$_k$

620

INITIALISER i A 1

630

TESTER N$_i$

640

INITIALISER S$_i$

650

$S_i = S_i + C_i + j$

660

$r+a_i = C_i \times (C_i - 1)/2 + S_i)$

670

INCREMENTER R+A DE r+a$_i$

680

$n = r+a_i$

710

INCREMENTER MULTRAn

720

FIG. 4B

$810$ ⟶ | $a_i = C_i \times SOM_j$ |

$820$ ⟶ | INCREMENTER A DE $a_i$ |

$910$ ⟶ | INCREMENTER MULTAn DE MULTATOT ($N_i$, n) |

$920$ ⟶ ◇ AUTRE CANAL i ?

$930$ ⟶ ◇ AUTRE CYCLE $CYC_k$ ?

| $R = R+A - 1/CYC \times A$ | ⟶ $951$

| MULTRn = MULTRAn - 1/CYC × MULTAn | ⟶ $953$

| EFFECTUER NORMALISATIONS | ⟶ $955$

| MEMORISER R+A, A, R, MULTRAn, MULTAn, MULTRn | ⟶ $957$

FIG. 4C

FIG. 5

FIG. 6

FIG. 7

EP 0 678 814 A1

# RAPPORT DE RECHERCHE EUROPEENNE

Office européen
des brevets

Numero de la demande
EP 95 40 0883

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | PROCEEDINGS OF THE INTERNATIONAL CONFERENCE ON NUCLEAR FUEL REPROCESSING AND WASTE MANAGEMENT "RECOD 87", 28 Août 1987 PARIS, FRANCE, pages 1503-1516, Y. BÉROUD, P. JOURDE 'MEASUREMENT OF ALPHA EMITTERS IN RADIOACTIVE WASTE' * page 1514 - page 1515 * | 1,2, 13-15 | G06F17/00 G01T3/06 G01N23/22 |
| A | LA TECHNIQUE MODERNE, JUILLET - AOUT 87, vol. 79, no. 7-8, Juillet 1987 FRANCE, pages 41-43, C. LAMBERMONT 'UN GENERATEUR DE NEUTRONS POUR CARACTERISER LES DECHETS RADIOACTIFS' Schéma 1 sur page 42 | 1-15 | |
| A | EP-A-0 307 271 (COMMISSARIAT A L'ENERGIE ATOMIQUE) * le document en entier * | 1,13 | |
| A | US-A-4 580 056 (KAISER ET AL.) * le document en entier * | 1,13 | DOMAINES TECHNIQUES RECHERCHES (Int.Cl.6) |
| A | US-A-3 636 353 (UNTERMYER) * le document en entier * | 1,13 | G06F G01T G01N |

Le présent rapport a été établi pour toutes les revendications

| Lieu de la recherche | Date d'achèvement de la recherche | Examinateur |
|---|---|---|
| LA HAYE | 6 Juillet 1995 | Suendermann, R |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

24